# EUROPEAN PATENT SPECIFICATION

(11) **EP 0 551 948 B1**
(45) Date of publication and mention of the grant of the patent: **19.03.1997**
(21) Application number: 93200079.7
(22) Date of filing: 13.01.1993
(51) Int. Cl.: A01B 73/04, A01B 63/00

(54) **A soil cultivating machine**
Bodenbearbeitungsmaschine
Machine pour travailler le sol

(30) Priority: 15.01.1992 NL 9200062
(43) Date of publication of application: 21.07.1993
(73) Proprietor: C. van der Lely N.V., NL-3155 PD Maasland (NL)
(72) Inventor: Bom, Cornelis Johannes Gerardus, NL-3181 VC Rozenburg (NL); Haaring, Arie, NL-3155 BP Maasland (NL)
(74) Representative: Mulder, Herman

(56) References cited:
- EP-A- 0 136 535
- AU-B- 535 479
- DE-C- 185 451
- FR-A- 1 340 767
- GB-A- 814 277
- NL-A- 6 611 429
- US-A- 3 811 516
- US-A- 4 520 877

## Description

The present invention relates to a soil cultivating machine, a weeding harrow in particular, comprising a frame couplable to the three- point lifting hitch of a tractor, to which frame there are attached two harrow sections provided with working members, the sections being in alignment and adjacent to one another, which sections near one end are arranged such that they are pivotal relative to the frame about a shaft which at least substantially extends in the direction of operative travel, which frame extends over and, as seen in the direction of operative travel, in front of the sections.

A machine of this type is known from the Dutch Patent Application 6611429. The present invention has for its object to provide a more advantageous construction, in particular with respect to the suspension of the machine. Particularly at large working widths, the known suspension is not satisfactory under all working conditions.

According to the invention, an attractive construction in this respect is achieved in that at least part of the frame extending in front of the sections extends, as seen in the direction perpendicular to the operative travel direction, beyond the track width of the tractor, to which frame part arms carrying supporting elements are coupled slidably in the direction perpendicular to the operative travel direction and having a length of at least about half the width of said frame, and in that the supporting elements can be mounted with a mutual spacing equal to one half of the machine.

In this way, contrary to the known machine, the weeding harrow is additionally suspended from the soil, so that, at least in some conditions, a more quiet work of the harrow is achieved. More in particular, the harrow may be favourably suspended near the middle of each harrow section. The harrow will, in some conditions, in this way follow the soil surface more smoothly, while at the same time small unevennesses are dampened due to the large mutual distance of the suspension elements, thus contributing to a stable working of the harrow.

It is remarked that additional suspension of a weeding harrow is known from the French Patent Application 1 340 767, as well as a possibility of adaption of the suspension in the direction along the working width. However, this possibility is only within a short range and within the boundaries of the main frame, so that the suspension may be adapted to the wheel width of the tractor and/or the crop lines. A disadvantage of this machine is that any irregularity encountered by the suspension elements causes a relatively high upward movement of large parts of the machine, particularly near the ends thereof.

According to a specific embodiment of the invention, an arm is passed through two lugs which are attached remote from each other to the vertical portion of the frame and are provided with apertures for this purpose. It is then advantageous for the arm to have a rectangular profile, whilst the arm is lockable relative to the frame by means of one or more pins which are each inserted near a lug through a bore in the arm. Via an upwardly directed support, a supporting element is connected adjustably in height to an arm via two horizontally arranged lugs which are provided with a fitting aperture for the support. An advantageous construction is obtained when the lugs are clamped to the upper and the lower side of the arm by means of bolts applied along the leading and trailing side of the arm. In a likewise advantageous embodiment, a supporting element is constituted by a wheel.

According to a further advantageous embodiment of the invention, the machine includes four harrow sections arranged in line transversely to the direction of operative travel, the arrangement being such that two harrow sections provided at one side of the machine are disposed such that they are upwardly pivotable relative to each other. The width of the two innermost harrow sections then amounts to three metres. The working width of an outer harrowing section may amount to 1.5 metres. According to a further feature of the invention, the outer harrow sections are located in the transport position of the machine between the inner harrow sections. In accordance with the invention, the present construction, in which the supporting elements and the harrow sections are independently movable relative to each other, renders it advantageously possible that the machine can be stored advantageously, i.e. as a parcel of four vertical harrow sections arranged in a side-by-side relationship. Both the width and the height then remain within the legal and practically acceptable limits.

In accordance with a still further feature, a tensile spring is disposed between a portion located at some height about the pivot shaft between two harrow sections of an outer harrow section and a portion of an inner harrow section. Such a construction relieves folding of the machine, the outer harrow section being moved about the said pivot shaft to on top of the inner harrow section. To do so in an advantageous manner, an outer harrow section is provided, in accordance with the invention, with a handle which can be disposed outside the working range of a harrow section. In an advantageous embodiment thereof, an outer harrow section includes a telescopic beam structure arranged in the direction of travel, wherein the inner beam can reach to beyond the working range of the harrow section. To facilitate upward pivoting of this outer harrow section, it is advantageous, in accordance with the invention, for the telescopic beam structure to have a round profile.

In accordance with further advantageous features of the invention, the outermost lugs for the support of the arms are interspaced by approximately 2.5 metres. In particular, it is advantageous for a harrow section to include skeleton beams which, in a cross-sectional view, are arranged in a rectangular relationship.

For a better understanding of the invention and to show how the same may be carried into effect, reference will now be made, by way of example, to the accompanying drawings, in which:
Figure 1 is a plan view of a soil cultivating machine in accordance with the invention;

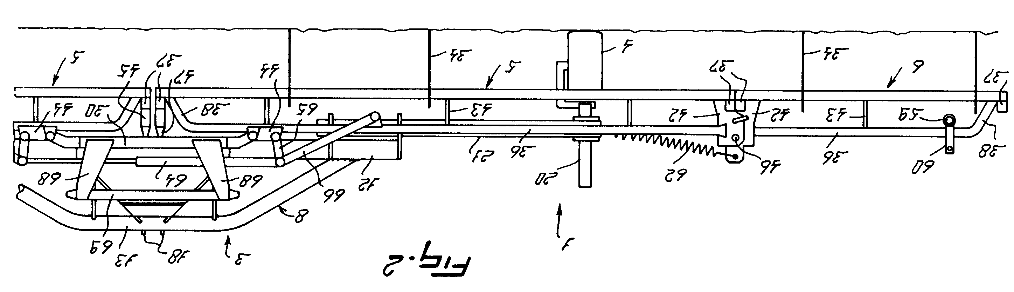

Figure 2 is a rear view of the machine, taken in the direction of arrow II in Figure 1;

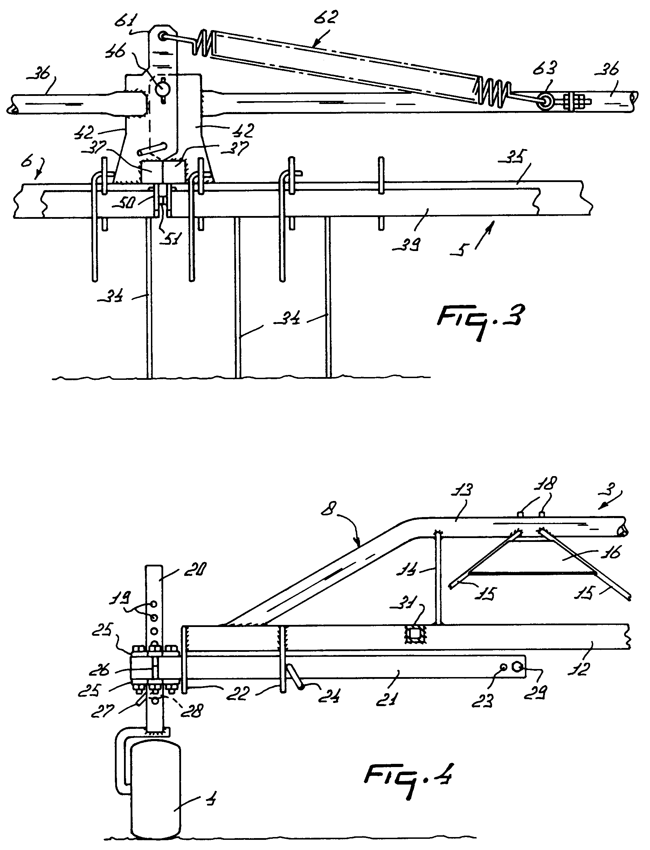

Figure 3 is a view of a portion of the machine, more in particular the connection between two harrow sections, taken in the direction of arrow III in Figure 1;
Figure 4 is a view taken on line IV-IV in Figure 1, in which the relevant wheel is shifted towards the midway point together with the arm on which the wheel is secured;
Figure 5 is a schematic view of the machine in its transport position;
Figure 6 is a cross-sectional view taken on line VI-VI in Figure 1, in which the soil working members have been omitted for the largest part, and
Figure 7 shows the construction for the central adjustment of the soil working members and is a view taken on line VII-VII in Figure 1.

In the drawings, corresponding components have been given the same reference numerals. In further respects, the invention is in no way limited to the embodiment illustrated and described here; it only serves as an illustration of the inventive idea.

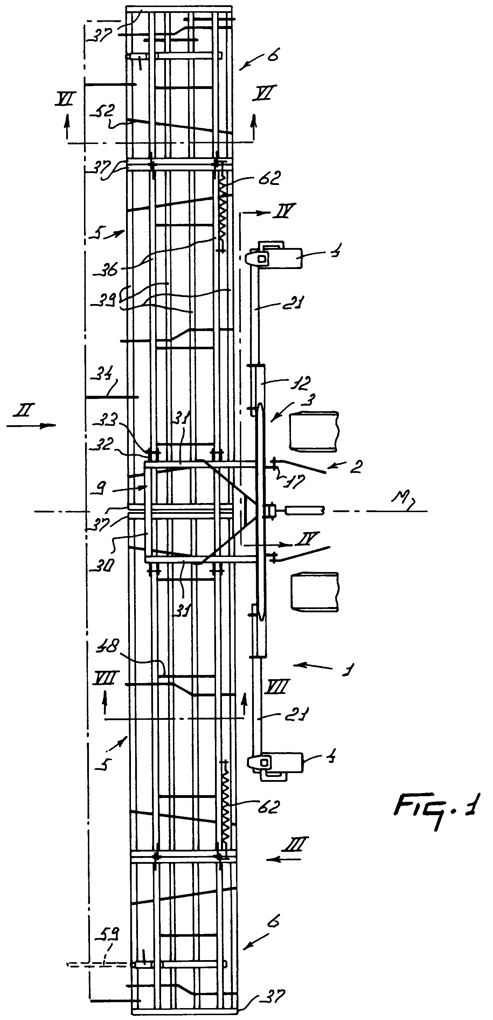

Figure 1 shows a soil cultivating machine 1, more specifically a weeding harrow, in the state in which it is coupled to the three-point lifting hitch 2 of a tractor. The machine comprises a frame 3 which is supportable on the soil with the aid of supporting elements 4, wheels in the present case. Mounted to the frame 3, at each side of the central line M of the tractor and the machine, is a central harrow section 5, which is pivotable about shafts 33 extending in the direction of travel. Fitted to the outer end of each central harrow section 5 is an outer harrow section 6, which is pivotal about shafts 46 which extend in the direction of travel.

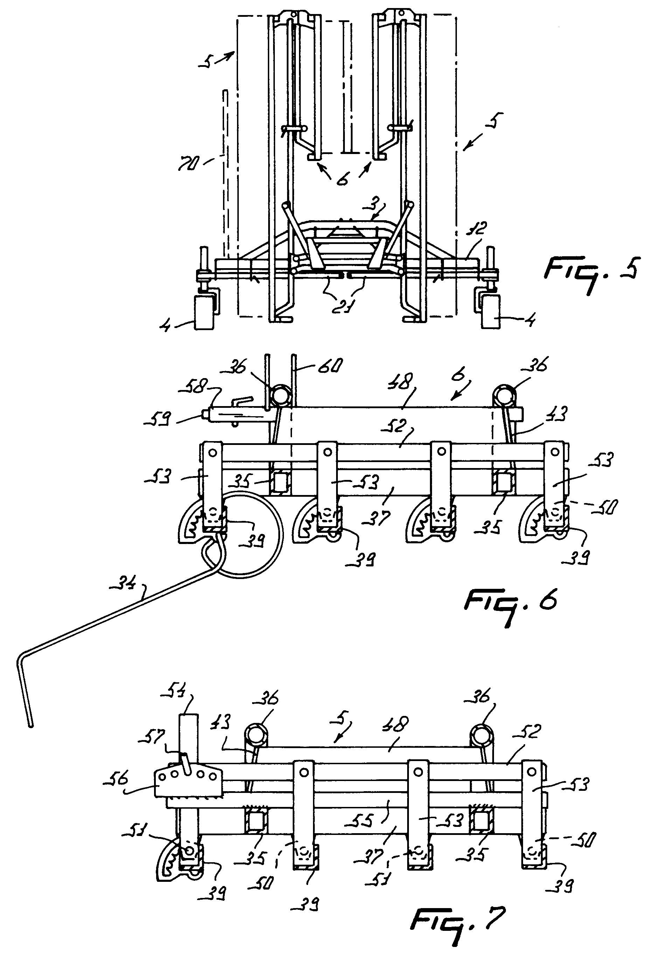

The frame 3 may be considered as consisting of two frame works 8 and 9, which are arranged at square angles relative to each other. Struts 10 are used to reinforce the mutual spacing between these frame works 8, 9. The frame portion 8, or the above-mentioned frame work 8, defines an imaginary plane which is directed upwardly, i.e. in a more or less vertical direction. As is shown in Figure 4, the frame work 8 includes a carrying beam 12. For the purpose of reinforcing the construction and for the accommodation of a coupling point 18, a large bracket 13 having a horizontally extending central portion is provided over this carrying beam. The bracket 13 is made out of a length of round pipe having a diameter of approximately 100 mms. Near the ends of the central portion of the bracket 13, a support 14 is arranged vertically between the carrying beam 12 and the bracket 13. The frame portion 8 includes, disposed in its midway point, a pair of upper lugs 18 for coupling to the top rod of the standard three-point lifting hitch of a tractor and lower lugs 17 for coupling to the lifting arms of a tractor. In the present embodiment, the width of the carrying beam 12 slightly exceeds 2.5 metres.

At each end, the carrier 12 of the frame portion 8 is provided with two lugs 22 which are spaced apart by approximately 30 cms. In this arrangement, the location of an outer lug 22 coincides with the end of the carrying beam 12. The lugs 22 have square recesses, through which an arm 21 is passed with a fit. The lugs 22 and the apertures therein are provided such that the arm 21 is slidable parallel to the carrying beam 12. The arm has a length of approximately 135 cms. At a slight distance from the inner end of the arm, a threaded bolt 29 is passed through a bore 23 in the arm 21. An upwardly directed support 20 for a wheel 4 is connected to the outer end of the arm 21. The lower end of the support 20 is designed as a bracket, which extends forwardly and downwardly at an angle to the upper part of the support 20. The support 20 is a square tube, which is provided with bores 19 and is inserted through fitting apertures in horizontally extending lugs 25. By means of three bolts and nuts 26 these lugs 25 are clamped against the top and bottom side of the end of an arm 21. The three bolts 26 are passed in a triangular pattern through the plates 25, but outside and along the leading and trailing sides of the square arm 21. This construction prevents the arm 21 from being weakened due to holes drilled therein. The arm 21 is already provided in various places with drilled holes 23, which extend in the direction of travel A and through which a pin 24 can be inserted. The number of drilled holes 23 is so large that the arm is at least lockable in a transport position, as shown in Figure 4, and an extreme working position, as shown in Figure 1. In the transport position, the arm 21 is fully moved to the midway point M of the machine, i.e. that any further shift is prevented by the contact between the lugs 25 about the arm 21 and the outer lugs 22 of the carrying beam 12. The arm 21 can be locked in this position by means of a pin 24 inserted through a drilled hole 23 located immediately next to that side of an inner lug 22 that faces the midway point M. In the extreme working position, as shown in Figure 1, the arm 21 is locked in position by the contact of the bolt 29 with that side of the inner lug 22 that faces the midway point M and with the locking pin 24 which is inserted through a drilled hole 23 which, in this position, is located immediately next to the outwardly facing side of the inner lug 22.

The frame portion 9 disposed at a right angle on the vertically directed frame work of the frame portion 8 defines an imaginary, approximately horizontally extending plane. The frame work 9 includes two beams 30 which extend transversely to the direction of operative travel A and parallel to each other and have their ends interconnected via beams 31, which extend in the direction of operative travel A. At their leading ends, the beams 31 are connected to the carrying beam 12 of the upwardly directed frame work 8. Disposed against the rearmost half of each of the two beams 31 is one end of a strut 15, which strut 15 has its other end connected near the lugs 18 to the bracket 13 of the vertical frame work 8. As a further reinforcement, the struts 15 are interconnected by a plate. The beams 31 are provided at the sides which are remote from each other with interspaced pairs of lugs 32, to each of which a pivot shaft 33 is connected at the said sides of a beam 31 which are remote from and in line with each other. The pairs of lugs 32 provided with shafts 33 constitute coupling points for the two central harrow sections 5, which are provided with soil working members 34. One of these centrally located harrow sections, which relative to the central line M are a mirror image of each other, will be described in greater detail hereinafter.

A harrow section 5 includes a frame work formed by four beams 35, 36 which extend transversely to the direction of travel A and which, in a cross-sectional view as shown in Figures 6 and 7, define the angle points of an imaginary rectangular figure. The lower beams 35 of this frame work have an upright rectangular profile and the upper pair of beams 36 are made of round tubes. The lower pair of beams 35 are interconnected at their ends by a frame beam 37 extending in the direction of operative travel. At the outer side of a central harrow section 5, an upper frame beam 36 is connected via an upwardly directed plate-like support 42, which extends transversely to the direction of operative travel, to the relevant lower frame beam 35 and to the relevant frame beam 37 which extends in the direction of travel. A plate-like support 42 extends transversely to the direction of travel A to slightly beyond a frame end defined by a beam 37. Straight over the outer side of a beam 37, the support 42 is provided with a drilled hole, through which a pivot 46 for connection to an outer harrow section 6 is passed. At the inner end, an upper frame beam 36 is provided with a portion 38, which is folded through an angle of approximately 45° and whose end is connected to the inner frame beam 37 located in the direction of travel.

Each one of the upper frame beams 36 is provided at some distance from the ends facing the midway point M of the machine with a pair of lugs 44 provided with two bores. The inner bore of this pair connects the frame work of a harrow section 5 to the frame 3 via the lugs 32 and the shafts 33. In the operating state, the downward deflection of the predominant portion, located relative to the central line M at the outer side of the shafts 33, of a harrow section 5 is counteracted by stops 45 which are provided on that portion of the frame of a harrow section 5 that is located at the inner side of the shafts 33 and bear against the respective frame beams 30 of the horizontal carrying frame 9. Applied at the upper side of the stops 45 is an elastic material, here formed by a rubber element 47. Such a rubber element absorbs shocks which may occur during oscillating motions of the harrow sections 5 and 6 about the shaft 33.

The carrying frame of a harrow section 5 is reinforced by supports 43 in the form of upwardly directed strips of metal which extend from an upright side of a lower frame beam 35 to a relevant upper frame beam 36. For the purpose of further reinforcement, a supporting plate 48 extends between each of these strips 43 at a square angle to the imaginary plane in which a strip 43 is located. The height of this supporting plate 48 is approximately 2/3 of the height between the upper and the relevant lower frame beam, which amounts to approximately 13 cms.

The carrying frame of a harrow section 5 is further provided, as is shown in inter alia Figures 6 and 7, with four carriers 39 for soil working members 34. The carriers 39 are constituted by angle iron members and extend transversely to the direction of travel A between lugs 50 applied to the bottom side of the two frame beams 37 of a harrow section 5, which are located in the direction of travel A. To that end, the carriers 39 are fitted at their ends with a (non-shown) lug. The lugs of carrier 39 and frame beam 37 are both provided with a hole, through which a common shaft 51 is passed. The carriers 39 are interconnected by means of three shifting rods, which are distributed uniformly with interspaces of approximately 1 metre along the length, in this embodiment 3 metres, of a central harrow section 5. The shifting rods 51, which predominantly extend in the direction of travel A, are pivotably connected to an upwardly directed pawl 53, which is rigidly connected to the relevant carrier 39. The centremost pawl 53 at the rear carrier 39 is extended, as is shown in Figure 7, so that a handle 54 is formed, by means of which all the carriers 39 and the soil working members 34 provided thereon can centrally be shifted about the relevant shafts 51, via which the carriers 39 are attached to the frame of a harrow section 5. At the bottom side of the central shifting rod 52, a connecting rod 55 is arranged, which is rigidly connected to the lower frame beam 35. Near the handle 54 for adjusting the soil working members 34, this rod 55 is fitted with a plate 56 in which, for the purpose of adjustment of the soil working members 34, five apertures are made on an imaginary circular line. This imaginary circle coincides with the circle, through which a projection applied on the handle and fitting in the apertures rotates, so that the setting of the working members can be locked with a pin 57. Thus the soil working members 54 can be adjusted to five different positions.

The outer harrow sections 6, which in the present case have a width of 1.5 metres, are of a similar structure as a central harrow section 5. The frame beams 35 and 36 and the carriers 39 are located, in the operating position, in the extension of the corresponding beams 35, 36 or carriers 39 of the central harrow section 5. The connection of an upper frame beam 36 to a frame beam 37 arranged in the direction of travel A via a folded-over portion 38 of the upper beam 36 is located near the outer harrow section 6 at the outer end. The connection between the upper and the lower frame beam via an upright support 42 is now located relative to the centre line M at the inner side of the harrow section 6. The upright support 42 for the carrying frame of the outer harrow section 6 is positioned, relative to the direction of travel A, directly at the leading side of the support of the inner harrow section, so that the outer and the central harrow sections are pivotal relative to each other in the upward direction. The frame beams 37 which point in the direction of travel A and are contiguous to each other, of an outer and a central harrow section abut on each other by means of one upwardly directed side and thus form a stop against the downward pivotal motion of the outer harrow section. When the said frame beams 37 are contiguous to each other, the frame beams 34, 36 extending transversely to the direction of travel, and the carriers 37 of the two harrow sections 5, 6 are in alignment. The present outer harrow section 6 is further provided near its two ends with a connecting rod 52, already described, for shifting the working members 34. One of these rods, preferably the outermost one, is provided with a handle 54 with associated setting plate 56. The frame work of an outer harrow section 6 is provided near its midway point with the likewise described connecting structure with the strip 43 and plate 48 between the four frame beams 35, 36.

Near its outer end, an outer harrow section 6 is provided with a round cylinder 58 which extends in the direction of operative travel A and is applied against the bottom side of the two upper frame beams 36. A handle 59, constituted by a round rod, is slidable with a fit in said cylinder. This handle 59 is of such a length that, in the extended state, it reaches by means of one end beyond the working range B of the soil working members 34, whilst the other end is located in the tube over a sufficient length to pivot the harrow section 6 by means of the handle 59 about the pivot shaft 46 relative to the inner harrow section 5. The outer harrow section 6 can be pivoted through substantially 180° about this shaft 46. In the transport position, an outer harrow section 6 is located upside down on the outer portion of a central harrow section 5. So as to provide that the upper frame beams 36 of the central and outer harrow sections rest on each other to the best possible extent, the outer harrow section 6 is fitted near its outer end with a pair of upwardly directed guide strips 60 which, after having been pivoted about the shaft 46, envelop the upper frame beams 36 of the central harrow section 5 with a close fit. These guide strips are also provided with a bore, by means of which the outer harrow section can be locked in the transport position to the inner harrow section 5.

The rearmost upwardly directed support 42 of an outer harrow section 6 is provided with an extension 61, which reaches to approximately 10 cms above the relevant pivot shaft 46. At the end thereof, a hole is drilled in which the remote end of a tensile spring 62 is hooked. The tensile spring 62 is hooked with its innermost end to an eye applied in the region of the relevant upper frame beam 36 at the leading side of the relevant frame work. The arrangement is such that the eye is adjustable transversely to the direction of travel A with the aid of a nut and a lock nut. In operation, the tensile spring is in the stretched state. This significantly facilitates manual pivoting of the outer harrow section 6 to its transport position.

The transport position of the entire machine is shown in Figure 5. In this transport position, the central harrow sections 5, together with the outer harrow sections in their above-described transport position, are directed upwardly after having been pivoted about the pivot shaft 33 with the aid of an adjusting cylinder 64. Already before this transport position can be reached, the entire machine is lifted in order to make room for the downward pivotal motion of that portion of a central harrow section 5 that is located centrally relative to the pivot shaft 33.

The operating cylinder 64 has its two ends connected to one end of two strips 65 and 66, respectively, which have their other end pivotably connected at some distance from each other to the upper frame beams 36.

The beam 30 positioned at the rear side of the horizontal frame portion 9 is provided with upwardly directed strips 68, which at their upper ends are connected by a beam 69, to the ends of which members made of an elastic material, preferably rubber, are applied. In the upwardly deflected position of the machine, the harrow sections bear against these portions of the beam 69. The machine can be locked in the transport position by means of a (non-shown) hook. In an advantageous transport position, the frame works of the two central harrow sections face each other at the upper side of the frame 3 at a slight angle. The transport width of the machine is defined by the width of the carrier beam 12 of the vertical frame portion 8 and the arms for the supporting elements, which arms are in a position in which they have been shifted inwardly to the farthest possible extent. This transport width is slightly more than 2.5 metres.

As is shown schematically in Figure 5, the invention further includes an upwardly directed, elongate protection element 70 for the soil working members 34, constituted by a robust tube. The tube is connected in a similar manner as the support 20 to lugs provided on the carrier beam 12 of the frame. The arrangement is such that the tube borders on the end of the soil working elements, when the harrow sections are in the transport position. Such a tube prevents sagging of the soil working elements 34 due to hitting, for example, overhanging tree branches, when during transport the machine is manoeuvred over narrow roads.

The invention is in no way limited to the features described in the foregoing, but also relates to all the details in the drawings. The invention further relates to all kinds of alternatives in the construction, of course comprised within the wordings of the following claims.

## Claims

1. A soil cultivating machine, a weeding harrow in particular, comprising a frame (3) couplable to the three-point lifting hitch (2) of a tractor, to which frame (3) there are attached two harrow sections (5) provided with working members, the sections (5) being in alignment and adjacent to one another, which sections near one end are arranged such that they are pivotal relative to the frame (3) about a shaft (33) which at least substantially extends in the direction of operative travel, which frame (3) extends over and, as seen in the direction of operative travel, in front of the sections (5), characterized in that at least part of the frame extending in front of the sections (5) extends, as seen in the direction perpendicular to the operative travel direction, beyond the track width of the tractor, to which frame part arms (21) carrying supporting elements (4) are coupled slidably in the direction perpendicular to the operative travel direction and having a length of at least about half the width of said frame (3), and in that the supporting elements (4) can be mounted with a mutual spacing equal to one half of the machine.

2. A soil cultivating machine as claimed in any one of the preceding claims, characterized in that an arm (21) is passed through two lugs (22) which are attached spaced apart to the leading part of the frame (3) and are provided with a rectangular aperture for receiving the arms (21), the arms having a matching profile.

3. A soil cultivating machine as claimed in any one of the preceding claims, characterized in that a supporting element (4) is connected adjustably in height to an arm (21) via an upwardly directed support (20).

4. A soil cultivating machine as claimed in any one of the preceding claims, characterized in that a support (20) is connected to an arm (21) via two horizontally arranged lugs (25) which for the benefit of the support are provided with a fitting aperture, the lugs (25) being clamped to the top and bottom side of the arm (21) by bolts disposed along the front and the rear sides of the arm.

5. A soil cultivating machine as claimed in any one of the preceding claims, characterized in that the machine includes four in-line harrow sections (5, 6) arranged transversely to the direction of travel, two harrow sections (5, 6) arranged at one side of the machine being disposed such that they are upwardly pivotable relative to each other.

6. A soil cultivating machine as claimed in any one of the preceding claims, characterized in that the machine can be adjusted to a transport position, wherein the inner harrow sections (5) are directed upwardly and wherein the outer harrow sections (6) are located between the inner harrow sections (5).

7. A soil cultivating machine as claimed in any one of the preceding claims, characterized in that a tensile spring (62) is arranged between a portion of an outer harrow section (6) which is located at some height above the pivot shaft (46) between two harrow sections and a portion of an inner harrow section (5).

8. A soil cultivating machine as claimed in any one of the preceding claims, characterized in that an outer harrow section (6) is provided with a telescopic beam construction (58, 59) arranged in the direction of travel, it being possible for the inner beam (59) to reach to beyond the working range of the harrow section (6), the telescopic beam structure (58, 59) having a round profile.

9. A soil cultivating machine as claimed in any one of the preceding claims, characterized in that the outer lugs (22) for supporting the arms (21) are spaced apart by approximately 2.5 metres.

## Patentansprüche

1. Bodenpflegemaschine, insbesondere Jätegge, mit einem an die Dreipunkt-Hebevorrichtung (2) eines Schleppers anzuschließenden Rahmen (3), an dem zwei mit Bearbeitungsgliedern versehene Eggenfelder (5) angebracht sind, die miteinander fluchten und aneinander angrenzen, wobei die Eggenfelder nahe einem Ende derart ausgebildet und angeordnet sind, daß sie relativ zu dem Rahmen (3) um eine Achse (33) schwenkbar sind, die sich zumindest im wesentlichen in Arbeitsrichtung erstreckt, und wobei der Rahmen (3) über und in Arbeitsrichtung vor den Eggenfeldern (5) angeordnet ist,
dadurch gekennzeichnet, daß zumindest Teilstücke des vor den Eggenfeldern (5) angeordneten Rahmens quer zur Arbeitsrichtung betrachtet über die Spurbreite des Schleppers hinausreichen, daß an den Teilstücken Stützelemente (4) tragende Arme (21) angebracht sind, die quer zur Arbeitsrichtung verschiebbar sind, und deren Länge mindestens annähernd der halben Breite des Rahmens (3) entspricht, und daß die Stützelemente (4) derart anzubringen sind, daß ihr Abstand zueinander gleich der halben Maschinenbreite ist.

2. Bodenpflegemaschine nach einem der vorhergehenden Ansprüche,
dadurch gekennzeichnet, daß ein Arm (21) durch zwei Stützen (22) hindurchgeführt ist, die an der Vorderseite des Rahmens (3) mit Abstand zueinander angebracht sind und eine rechteckige Öffnung zur Aufnahme der Arme (21) aufweisen, wobei die Arme passend profiliert sind.

3. Bodenpflegemaschine nach einem der vorhergehenden Ansprüche,
dadurch gekennzeichnet, daß ein Stützelement (4) über einen aufwärts gerichteten Träger (20) höhenverstellbar mit einem Arm (21) verbunden ist.

4. Bodenpflegemaschine nach einem der vorhergehenden Ansprüche,
dadurch gekennzeichnet, daß ein Träger (20) mit einem Arm (21) über zwei horizontal angeordnete Stützen (25) verbunden ist, die eine Paßöffnung für den Träger aufweisen und an die Ober- und die Unterseite des Armes (21) mittels Schrauben angeklemmt sind, die entlang der Vorder- und der Hinterseite des Armes vorgesehen sind.

5. Bodenpflegemaschine nach einem der vorhergehenden Ansprüche,
dadurch gekennzeichnet, daß die Maschine vier fluchtende Eggenfelder (5, 6) aufweist, die sich quer zur Arbeitsrichtung erstrecken, wobei zwei auf einer Seite der Maschine befindliche Eggenfelder (5, 6) derart angeordnet sind, daß sie relativ zueinander aufwärts schwenkbar sind.

6. Bodenpflegemaschine nach einem der vorhergehenden Ansprüche,
dadurch gekennzeichnet, daß die Maschine in eine Transportlage einzustellen ist, in der die inneren Eggenfelder (5) hochgeklappt und die äußeren Eggenfelder (6) zwischen den inneren Eggenfeldern (5) angeordnet sind.

7. Bodenpflegemaschine nach einem der vorhergehenden Ansprüche,
dadurch gekennzeichnet, daß zwischen einem Abschnitt eines äußeren Eggenfeldes (6) und einem Abschnitt eines inneren Eggenfeldes (5) eine Zugfeder (62) mit Höhenabstand über der zwischen zwei Eggenfeldern liegenden Schwenkachse (46) angeordnet ist.

8. Bodenpflegemaschine nach einem der vorhergehenden Ansprüche,
dadurch gekennzeichnet, daß ein äußeres Eggenfeld (6) mit einer sich in Arbeitsrichtung erstreckenden Teleskopstange (58, 59) versehen ist, deren Innenstange (59) bis über den Arbeitsbereich des Eggenfeldes (6) hinaus auszufahren ist, und daß die Teleskopstange (58, 59) ein rundes Profil aufweist.

9. Bodenpflegemaschine nach einem der vorhergehenden Ansprüche,
dadurch gekennzeichnet, daß die äußeren Stützen (22) zur Halterung der Arme (21) mit einem Abstand von etwa 2,5 Metern zueinander angeordnet sind.

## Revendications

1. Machine pour cultiver le sol, en particulier une herse désherbeuse, comprenant un châssis (3) pouvant être couplé au dispositif d'attelage-levage (2) à trois points d'un tracteur, auquel châssis (3) sont attachées deux sections (5) de la herse, munies d'organes de travail, les sections (5) étant en alignement et adjacentes l'une à l'autre, lesquelles sections sont aménagées, près d'une extrémité, de manière à être pivotantes par rapport au châssis (3) autour d'un arbre (33) qui s'étend, au moins substantiellement dans la direction du sens de marche du travail, lequel châssis (3) s'étend par dessus les sections (5) et en avant d'elles en étant vu dans le sens de marche du travail,
**caractérisée** en ce qu'au moins une partie du châssis s'étendant en avant des sections (5) s'étend, en étant vue dans le sens perpendiculaire au sens de marche du travail, au delà de la largeur des roues du tracteur, à laquelle partie du châssis sont couplés de manière coulissante des bras (21) portant des éléments (4) de support, en coulissant dans le sens perpendiculaire au sens de marche du travail, lesdits bras (21) ayant une longueur égale à au moins environ la moitié de la largeur dudit châssis (3), et en ce que les éléments (4) de support peuvent être montés avec un espacement mutuel égal à une moitié de la machine.

2. Machine pour cultiver le sol selon l'une quelconque des revendications précédentes, caractérisée en ce qu'un bras (21) traverse deux pattes (22) qui sont attachées, en étant espacées l'une de l'autre, à la partie antérieure du châssis (3) et sont munies d'une ouverture rectangulaire pour recevoir les bras (21), les bras ayant un profil assorti.

3. Machine pour cultiver le sol selon l'une quelconque des revendications précédentes, caractérisée en ce qu'un élément (4) de support est relié de manière réglable en hauteur à un bras (21) par l'intermédiaire d'un support (20) dirigé vers le haut.

4. Machine pour cultiver le sol selon l'une quelconque des revendications précédentes, caractérisée en ce qu'un support (20) est relié à un bras (21) par l'intermédiaire de deux pattes (25) disposées horizontalement, qui sont munies, au bénéfice du support, d'une ouverture adaptée, les pattes (25) étant bridées sur les côtés supérieur et inférieur du bras (21) par des boulons disposés le long des côtés antérieur et postérieur du bras.

5. Machine pour cultiver le sol selon l'une quelconque des revendications précédentes, caractérisée en ce que la machine comporte quatre sections de herse (5, 6) disposées en ligne transversalement au sens de marche, deux sections de herse (5, 6) disposées sur un côté de la machine étant disposées de telle sorte qu'elles peuvent pivoter vers le haut, l'une par rapport à l'autre.

6. Machine pour cultiver le sol selon l'une quelconque des revendications précédentes, caractérisée en ce que la machine peut être ajustée en une position de transport dans laquelle les sections de herse intérieures (5) sont dirigées vers le haut et dans laquelle les sections de herse extérieures (6) sont situées entre les sections de herse intérieures.

7. Machine pour cultiver le sol selon l'une quelconque des revendications précédentes, caractérisée en ce qu'un ressort de tension (62) est disposé entre une partie d'une section de herse extérieure (6) qui est située à une certaine hauteur au-dessus de l'arbre (46) de pivotement entre deux sections de herse et une partie d'une section de herse intérieure (5).

8. Machine pour cultiver le sol selon l'une quelconque des revendications précédentes, caractérisée en ce qu'une section de herse (6) est munie d'une structure de poutre télescopique (58, 59) disposée dans le sens de marche, avec la possibilité, pour la poutre intérieure (59), de s'étendre jusqu'au delà de la zone de travail de la section (6) de la herse, la structure de poutre télescopique (58, 59) ayant un profil rond.

9. Machine pour cultiver le sol selon l'une quelconque des revendications précédentes, caractérisée en ce que les pattes extérieures (22) pour supporter les bras (21) sont espacées l'une de l'autre d'environ 2,5 mètres.
